# EUROPEAN PATENT SPECIFICATION

(11) **EP 2 840 240 B1**
(45) Date of publication and mention of the grant of the patent: **26.10.2016**
(21) Application number: 12874414.1
(22) Date of filing: 18.04.2012
(51) Int. Cl.: F01N 3/08, B01D 53/94, G01F 23/00, F01N 3/20, F01N 3/025, G01F 25/00

(54) **DEVICE FOR DETECTING REMAINING AMOUNT OF LIQUID**
VORRICHTUNG ZUR FESTSTELLUNG EINER FLÜSSIGKEITSRESTMENGE
DISPOSITIF DE DÉTECTION D'UN QUANTITÉ RESTANTE DE LIQUIDE

(43) Date of publication of application: 25.02.2015
(73) Proprietor: Toyota Jidosha Kabushiki Kaisha, Toyota-shi, Aichi-ken 471-8571 (JP)
(72) Inventor: OTA, Hirohiko, Toyota-shi Aichi 471-8571 (JP)
(74) Representative: D Young & Co LLP
(86) International application number: PCT/JP2012/060469
(87) International publication number: WO 2013/157095

(56) References cited:
- DE-A1-102008 001 919
- JP-A- 2003 090 251
- JP-A- 2006 250 117
- JP-A- 2008 082 201
- JP-A- 2010 151 094
- JP-A- 2011 247 137
- KR-A- 20100 003 829
- US-A1- 2011 107 812

## Description

### TECHNICAL FIELD

The present invention relates to a device for detecting a remaining amount of liquid.

### BACKGROUND ART

Various devices for detecting a remaining amount have been proposed that include a detector for detecting the remaining amount of liquid stored in a tank. For example, a device disclosed in Patent Document 1 includes a tank, which stores a urea water solution to be sprayed through an injection nozzle. The amount of the urea water solution in the tank is detected by a level sensor.

### PRIOR ART DOCUMENTS

### Patent Documents

Patent Document 1: Japanese Laid-Open Patent Publication No. 2007-55353
JP 2011 247137 A discloses an SCR system including a urea solution injection quantity accumulation unit which accumulates the injection quantity of a urea solution to calculate a urea solution injection quantity accumulated value; an accumulated value reset unit which resets the urea solution injection quantity accumulated value when a detected value from a detector varies; and a problem determination unit which determines that there is a problem in a level sensor when the urea solution injection quantity accumulated value exceeds a predetermined threshold for determination.
JP 2006 250117 A discloses a device for judging a reducing agent injection condition in an exhaust emission control system. Abnormality in injection of a urea aqueous solution is judged when the consumption of urea aqueous solution is not within a predetermined range, and an abnormality judgment output is generated and notified to vehicle occupants.

### SUMMARY OF THE INVENTION

### Problems that the Invention is to Solve

When the outside air temperature is very low, liquid in a tank may freeze. In particular, when the liquid around a detector is frozen, the detector makes a misdetection, making it difficult to detect the remaining amount of the liquid in the tank.

Accordingly, it is an objective of the present invention to allow the amount of liquid remaining in a tank to be detected even if the liquid around the detector is frozen. Means for Solving the Problems

To achieve the foregoing objective and in accordance with the present invention, a device for detecting a remaining amount of liquid is provided that includes a tank for storing liquid, a detector for detecting the remaining amount of liquid in the tank, a supplying mechanism, which supplies the liquid in the tank to an object to be supplied, an abnormality determination section, and an estimation section. The abnormality determination section determines whether the detector is misdetecting based on a first remaining liquid amount detected by the detector before starting liquid supply by the supplying mechanism, an integrated value of liquid supply amount supplied by the supplying mechanism from when the liquid supply by the supplying mechanism has been started, and a second remaining liquid amount detected by the detector after starting the liquid supply by the supplying mechanism. When the abnormality determination section determines that there is misdetection, a value obtained by subtracting the integrated value from the first remaining liquid amount is set as an estimated value of the remaining amount of liquid in the tank.

The remaining amount of liquid stored in the tank is gradually reduced when liquid supply by the supplying mechanism is started. Thus, when the liquid around the detector is not frozen and the detector is not misdetecting, the sum of the integrated value of the liquid supply amount supplied by the supplying mechanism from when the liquid supply by the supplying mechanism has started, that is, the integrated value of the amount of liquid in the tank consumed by the supplying mechanism and the second liquid remaining amount detected by the detector after starting the liquid supply by the supplying mechanism, that is, the actual liquid remaining amount detected during consumption of the liquid in the tank matches with the first liquid remaining amount, or the liquid remaining amount in the tank before starting the liquid supply.

If the liquid around the detector is frozen and the detector is misdetecting, the second remaining liquid amount, that is, the actual remaining amount of liquid detected during consumption of the liquid in the tank is inaccurate. Thus, the sum of the integrated value of the liquid supply amount and the second remaining liquid amount does not match with the first liquid remaining amount. In this manner, determination of whether the detector is misdetecting is made based on the first remaining liquid amount, the integrated value of the liquid supply amount, and the second remaining liquid amount as described above. The abnormality determination section determines whether the detector is misdetecting based on the first remaining liquid amount, the integrated value of the liquid supply amount, and the second remaining liquid amount. Thus, whether there is misdetection is properly determined.

If the abnormality determination section determines that there is misdetection, the estimation section estimates the amount of liquid remaining in the tank. The amount of liquid remaining in the tank can be estimated by subtracting the integrated value of the liquid supply amount from the first remaining liquid amount, that is, subtracting the integrated value of the amount of liquid in the tank consumed by the supplying mechanism from the amount of liquid remaining in the tank before starting the liquid supply. The estimation section sets a value obtained by subtracting the integrated value from the first remaining liquid amount as the estimated value of the liquid remaining amount in the tank. Thus, even if the detector is misdetecting due to freezing of the liquid around the detector, the amount of liquid remaining in the tank can be detected as the estimated value.

In accordance with one aspect of the present invention, the abnormality determination section calculates a value by subtracting the integrated value from the first remaining liquid amount. If there is a separation between the subtracted value and the second remaining liquid amount obtained when the subtracted value is calculated, the abnormality determination section determines that there is misdetection in the detector.

The estimated value of the amount of liquid remaining in the tank is calculated by subtracting the integrated value from the first remaining liquid amount. If the detector is misdetecting, the detection value of the detector does not match with the amount of liquid remaining in the tank. Thus, a separation occurs between the estimated value of the remaining amount of liquid and the second remaining liquid amount detected by the detector. The abnormality determination section determines that the detector is misdetecting if there is a separation between the value obtained by subtracting the integrated value from the first remaining liquid amount and the second remaining liquid amount obtained when the subtracted value is calculated. Thus, whether there is misdetection is properly determined based on the amount of liquid remaining in the tank.

In accordance with one aspect of the present invention, the abnormality determination section calculates a value by subtracting the second remaining liquid amount from the first remaining liquid amount. If there is a separation between the subtracted value and the integrated value obtained when the subtracted value is calculated, the abnormality determination section determines that there is misdetection in the detector.

The liquid consumption amount in the tank is calculated by subtracting the second remaining liquid amount from the first remaining liquid amount. The liquid consumption amount is a value that matches with the integrated value of the liquid supply amount when the detector has not made a misdetection. If the detector is misdetecting, the liquid consumption amount is not accurately calculated because the second remaining liquid amount is not accurately detected. Thus, in this case, the calculated liquid consumption amount and the integrated value of the liquid supply amount do not match. The abnormality determination section thus determines that the detector is misdetecting if there is a separation between the value obtained by subtracting the second remaining liquid amount from the first remaining liquid amount and the integrated value of the liquid supply amount obtained when the subtracted value is calculated. Thus, the abnormality determination section properly determines whether there is misdetection based on the consumption amount of liquid in the tank.

The integrated value of the liquid supply amount is calculated by detecting the actual liquid supply amount and accumulating the detection values. In accordance with another aspect of the present invention, the device for detecting a remaining amount of liquid according includes a controller, which sets a target value of the liquid supply amount and controls the supply amount of liquid supplied by the supplying mechanism. The determination section may calculate the integrated value of the liquid supply amount by accumulating the target value. In this case, it is unnecessary to separately provide a detection mechanism for actually detecting the liquid supply amount.

In accordance with one aspect of the present invention, the device for detecting a remaining amount of liquid further includes a freeze determination section, which determines whether the liquid in the tank is frozen. When the freeze determination section determines that the liquid is not frozen, the device for detecting a remaining amount prohibits determination by the abnormality determination section, and sets a detection value of the detector as the remaining amount of liquid in the tank.

The abnormality determination section and the estimation section calculate the integrated value of the liquid supply amount supplied by the supplying mechanism from when the supplying mechanism has started the liquid supply, that is, the integrated value of the amount of liquid in the tank consumed by the supplying mechanism. However, if an error occurs between the integrated value and the amount of liquid that is actually consumed, the estimation accuracy regarding the amount of liquid remaining in the tank is reduced. Thus, the abnormality determination section may make an erroneous determination, or in the estimation section, an estimation error of the remaining amount of liquid may be increased. If the liquid in the tank is not frozen, the detector can detect the amount of liquid remaining in the tank, and it is unnecessary to calculate the estimated value of the remaining amount of liquid. For this reason, in one aspect described above, the device further includes a freezing state determination section for determining whether the liquid in the tank is frozen. If the freezing state determination section determines that the liquid is not frozen, the determination by the abnormality determination section is prohibited, and the detected value of the detector is set as the amount of liquid remaining in the tank. In this manner, the amount of liquid remaining in the tank is accurately detected.

In accordance with one aspect of the present invention, when the outside air temperature is higher than a predetermined temperature, the freeze determination section determines that the liquid in the tank is not frozen.

In accordance with one aspect of the present invention, the device for detecting a remaining amount is provided in a vehicle that mounts an internal combustion engine. When the travel time of the vehicle is greater than a predetermined time, the freeze determination section determines that the liquid in the tank is not frozen.

In accordance with one aspect of the present invention, a configuration may be employed in which: the liquid is a reducing agent used in exhaust gas purification performed by an exhaust gas purifying catalyst for the internal combustion engine; the object to be supplied is an exhaust passage of the internal combustion engine; the supplying mechanism is an injection valve, which sprays the reducing agent; and the liquid supply amount is a spray amount of the injection valve.

### BRIEF DESCRIPTION OF THE DRAWINGS

Fig. 1 is a schematic diagram illustrating the entire structure of a first embodiment of the present invention;
Fig. 2 is a flowchart showing the procedure of a stopped state process according to the first embodiment;
Fig. 3 is a flowchart showing the procedure of a remaining amount detecting process according to the first embodiment;
Fig. 4 is a flowchart showing the procedure of a remaining amount detecting process according to a second embodiment;
Fig. 5 is a conceptual diagram showing the relationship between the outside air temperature and the travel time with respect to a set value of a freeze flag; and
Fig. 6 is a flowchart showing the procedure of a remaining amount detecting process according to a modification of the first embodiment.

### MODES FOR CARRYING OUT THE INVENTION

### First Embodiment

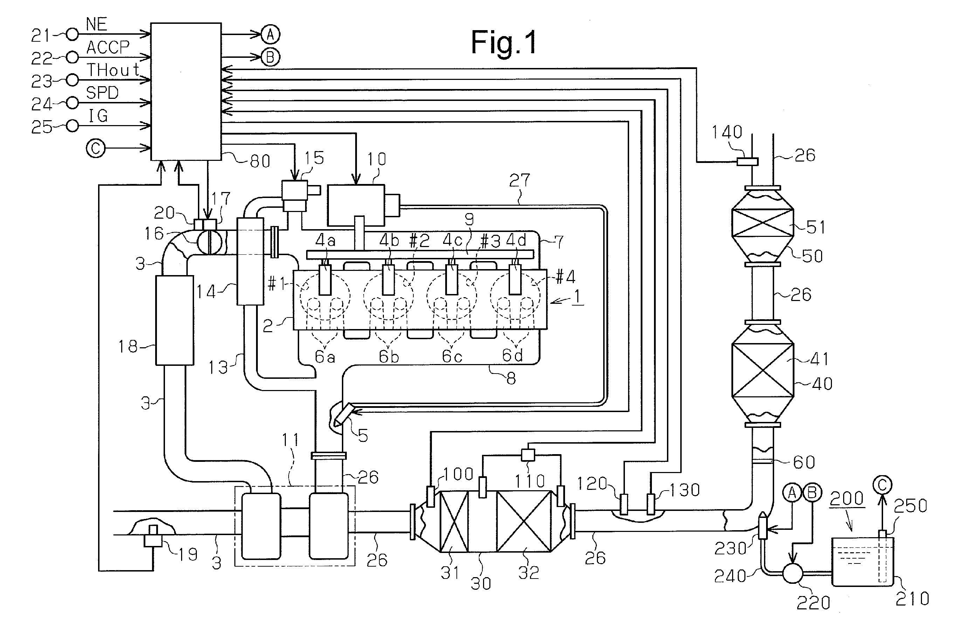

A device for detecting a remaining amount of liquid according to a first embodiment of the present invention will now be described with reference to Figs. 1 to 3. The device is applied to a diesel engine (hereinafter, referred to as an engine) installed in a vehicle.

As shown in Fig. 1, an engine 1 is provided with a plurality of cylinders #1 to #4. A cylinder head 2 has a plurality of fuel injection valves 4a to 4d. The fuel injection valves 4a to 4d each spray fuel into a combustion chamber of the corresponding one of the cylinders #1 to #4. The cylinder head 2 also has intake ports for introducing new air into the cylinders, and exhaust ports 6a to 6d for discharging combustion gas to the outside of the cylinders. The intake ports and the exhaust ports 6a to 6d correspond to the cylinders #1 to #4.

The fuel injection valves 4a to 4d are connected to a common rail 9, which accumulates high-pressure fuel. The common rail 9 is connected to a supply pump 10. The supply pump 10 takes in fuel in the fuel tank and supplies the common rail 9 with the high-pressure fuel. The high-pressure fuel supplied to the common rail 9 is sprayed into the cylinders from the fuel injection valves 4a to 4d when the fuel injection valves 4a to 4d are opened.

An intake manifold 7 is connected to the intake ports. An intake passage 3 is connected to the intake manifold 7. An intake throttle valve 16 for adjusting the intake air amount is provided in the intake passage 3.

An exhaust manifold 8 is connected to the exhaust ports 6a to 6d. An exhaust passage 26 is connected to the exhaust manifold 8.

A turbocharger 11 is provided in the middle of the exhaust passage 26. The turbocharger 11 supercharges the intake air to be introduced to the cylinders using exhaust gas pressure. An intercooler 18 is provided in the intake passage 3 between an intake-side compressor of the turbocharger 11 and the intake throttle valve 16. The intercooler 18 cools the intake air the temperature of which has been increased by supercharging of the turbocharger 11.

Furthermore, a first purifying member 30, which purifies exhaust gas, is provided in the middle of the exhaust passage 26 and downstream of the exhaust-side turbine of the turbocharger 11. An oxidation catalyst 31 and a DPF catalyst 32 are arranged in series with respect to the flow direction of the exhaust gas inside the first purifying member 30.

The oxidation catalyst 31 carries a catalyst for oxidation of HC in the exhaust gas. Also, the DPF catalyst 32 is configured by a porous ceramic, which is a filter that traps particulate matter (PM) in the exhaust gas, and further carries a catalyst for promoting oxidation of the PM. The PM in the exhaust gas is trapped when passing through a porous wall of the DPF catalyst 32.

Furthermore, a fuel addition valve 5, which supplies fuel as an additive to the oxidation catalyst 31 and the DPF catalyst 32, is provided in the vicinity of the cluster of the exhaust manifold 8. The fuel addition valve 5 is connected to the supply pump 10 via a fuel supply pipe 27. The arrangement position of the fuel addition valve 5 may be changed as required as long as it is arranged in the exhaust system and upstream of the first purifying member 30.

Also, a second purifying member 40, which purifies the exhaust gas, is provided in the middle of the exhaust passage 26 and downstream of the first purifying member 30. An exhaust gas purifying catalyst, which reduces and removes NOx in the exhaust gas using a reducing agent, or a selective catalytic reduction system for NOx (hereinafter, referred to as a SCR catalyst) 41 in this embodiment, is arranged in the second purifying member 40.

Furthermore, a third purifying member 50, which purifies the exhaust gas, is provided in the middle of the exhaust passage 26 and downstream of the second purifying member 40. An ammonia oxidation catalyst 51, which removes ammonia in exhaust gas, is provided inside the third purifying member 50.

The engine 1 is provided with a urea water supplying mechanism 200 for supplying a reducing agent, which is urea water in this embodiment, to the SCR catalyst 41. The urea water supplying mechanism 200 includes a tank 210 for storing urea water, a urea injection valve 230, which sprays the urea water into the exhaust passage 26, a supply passage 240, which connects the urea injection valve 230 to the tank 210, a pump 220 provided in the middle of the supply passage 240, and a level sensor 250, which detects the amount of the urea water stored in the tank 210. The remaining amount of the urea water in the tank 210 detected by the level sensor 250 is hereafter referred to as a sensor-detected remaining amount value SR. The level sensor 250 configures a detector.

The urea injection valve 230 is located in the exhaust passage 26 between the first purifying member 30 and the second purifying member 40, and has an injection hole that opens toward the SCR catalyst 41. When the urea injection valve 230 is opened, the urea water is sprayed into the exhaust passage 26 via the supply passage 240. The urea injection valve 230 configures a supplying mechanism.

The pump 220 is an electric pump. When rotated forward, the pump 220 delivers urea water from the tank 210 toward the urea injection valve 230. When rotated in reverse, urea water is delivered from the urea injection valve 230 toward the tank 210. That is, when the pump 220 is rotated in reverse, urea water is collected from the urea injection valve 230 and the supply passage 240, and is returned to the tank 210.

A dispersion plate 60 is also provided in the exhaust passage 26 between the urea injection valve 230 and the SCR catalyst 41. The dispersion plate 60 promotes atomization of the urea water by dispersing the urea water sprayed from the urea injection valve 230.

When the urea water sprayed from the urea injection valve 230 reaches the SCR catalyst 41, the urea water is adsorbed as ammonia. The ammonia adsorbed by the SCR catalyst 41 reduces and removes the NOx.

In addition, the engine 1 is equipped with an exhaust gas recirculation apparatus (hereinafter, referred to as an EGR apparatus). The EGR apparatus is an apparatus that lowers the combustion temperature in the cylinders by introducing some of the exhaust gas into the intake air, and thus reduces the generation amount of NOx. The exhaust gas recirculation apparatus is configured by an EGR passage 13, which connects the intake passage 3 to the exhaust manifold 8, an EGR valve 15, which is provided in the EGR passage 13, and an EGR cooler 14. Adjusting the opening degree of the EGR valve 15 controls the exhaust gas recirculation amount introduced from the exhaust passage 26 into the intake passage 3, that is, an external EGR amount. Furthermore, the EGR cooler 14 lowers the temperature of the exhaust gas flowing in the EGR passage 13.

Various types of sensors and switches for detecting the engine operating condition are mounted on the engine 1. For example, an air flow meter 19 detects an intake air amount GA in the intake passage 3. A throttle valve opening degree sensor 20 detects the opening degree of the intake throttle valve 16. An engine speed sensor 21 detects the speed of a crankshaft, that is, an engine speed NE. An accelerator pedal depression sensor 22 detects the depression amount of an accelerator pedal (acceleration member), that is, the degree of depression of the accelerator pedal ACCP. An outside air temperature sensor 23 detects an outside air temperature THout. A vehicle speed sensor 24 detects a vehicle speed SPD of a vehicle in which the engine 1 is installed. An ignition switch 25 detects a starting operation and a stopping operation of the engine 1 performed by a driver of the vehicle.

Also, a first exhaust gas temperature sensor 100 located upstream of the oxidation catalyst 31 detects the temperature of exhaust gas before flowing into the oxidation catalyst 31, which is a first exhaust gas temperature TH1. A differential pressure sensor 110 detects a pressure difference ΔP between the exhaust gas pressure upstream of the DPF catalyst 32 and the exhaust gas pressure downstream of the DPF catalyst 32.

A second exhaust gas temperature sensor 120 and a first NOx sensor 130 are provided in the exhaust passage 26 between the first purifying member 30 and the second purifying member 40, and upstream of the urea injection valve 230. The second exhaust gas temperature sensor 120 detects a second exhaust gas temperature TH2, which is the exhaust gas temperature before flowing into the SCR catalyst 41. The first NOx sensor 130 detects a first NOx concentration N1, which is the NOx concentration in the exhaust gas before flowing into the SCR catalyst 41.

A second NOx sensor 140 is provided in the exhaust passage 26 downstream of the third purifying member 50. The second NOx sensor 140 detects a second NOx concentration N2, which is the NOx concentration in the exhaust gas that has passed through the SCR catalyst 41.

The outputs of the various types of sensors are received by a control device 80. The control device 80 is configured mainly of a microcomputer including, for example, a central processing unit (CPU), a read only memory (ROM), which previously stores various types of programs and maps, a random access memory (RAM), which temporarily stores computation results of the CPU, a time counter, an input interface, and an output interface.

The control device 80 performs various types of control procedures for the engine 1 such as fuel injection amount control and a fuel injection time control of the fuel injection valves 4a to 4d and the fuel addition valve 5, discharge pressure control of the supply pump 10, drive amount control of the actuator 17, which opens and closes the intake throttle valve 16, and opening degree control of the EGR valve 15.

The control device 80 also performs, as one of exhaust gas purification control procedures, urea water addition control by the urea injection valve 230. In the addition control, a urea target amount QE is calculated based on, for example, the engine operating condition. The urea target amount QE is a target value of the supply amount of the urea water necessary for reducing NOx emitted from the engine 1. The urea target amount QE is calculated as the target amount of the urea water sprayed from the urea injection valve 230 per unit time. The opening state of the urea injection valve 230 is controlled such that the calculated urea target amount QE is sprayed from the urea injection valve 230. In this manner, during operation of the engine 1, the urea water is supplied to the exhaust passage 26 to remove the NOx, and when the engine 1 is stopped, supply of the urea water is also ceased. The control device 80, which sets the urea target amount QE and controls the urea injection valve 230, configures a controller.

In the present embodiment, the remaining amount of the urea water stored in the tank 210 is detected by the level sensor 250. However, when the outside air temperature is very low, the urea water in the tank 210 may freeze. In particular, when the urea water around the level sensor 250 is frozen, the level sensor 250 makes misdetection, making it difficult to detect the amount of urea water remaining in the tank 210.

In the present embodiment, even if the urea water around the level sensor 250 is frozen, the urea water remaining amount in the tank 210 is detected by performing a stopped state process and a remaining amount detecting process described below. The stopped state process and the remaining amount detecting process are repeatedly executed by the control device 80 at every predetermined cycle.

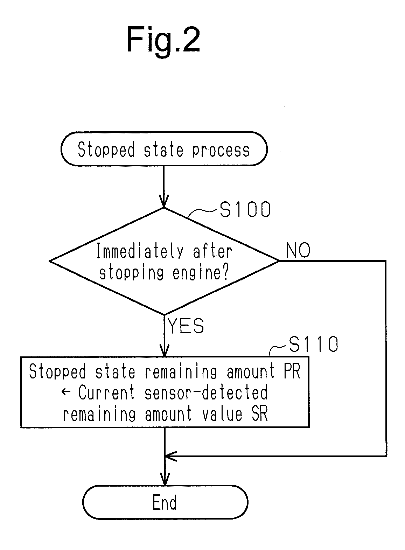

As shown in Fig. 2, when the stopped state process is started, it is determined whether it is immediately after the engine has been stopped (S100). In step S100, if it is immediately after the ignition switch 25 has been switched off, the decision outcome is positive. If it is not immediately after the engine has been stopped (S100: NO), the process is temporarily suspended.

If it is immediately after the engine has been stopped (S100: YES), the sensor-detected remaining amount value SR that is currently detected by the level sensor 250 is set as a stopped state remaining amount PR (S110). The process is then temporarily suspended. The stopped state remaining amount PR corresponds to a first liquid remaining amount.

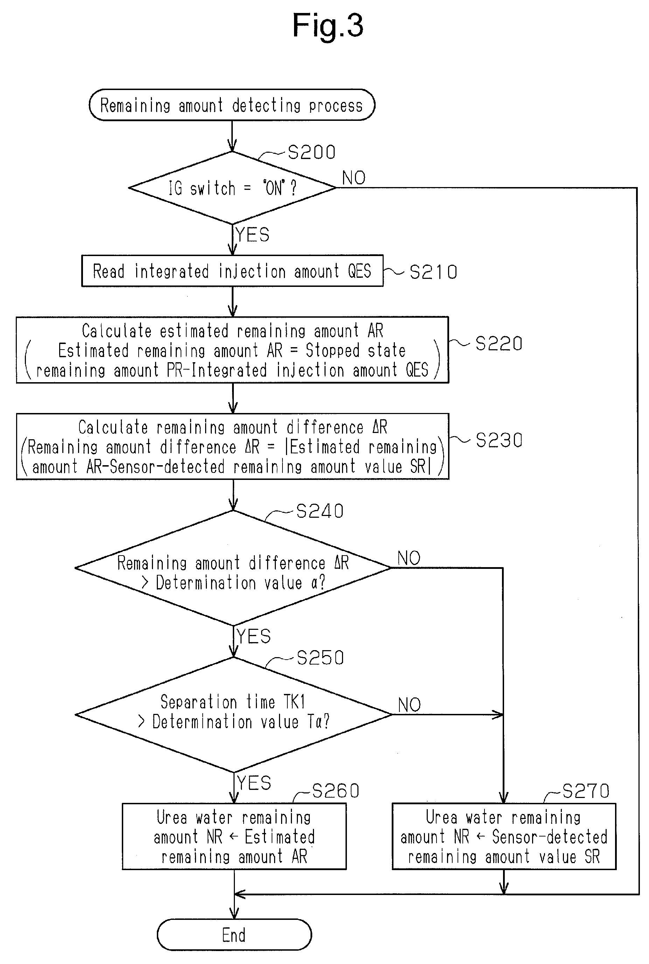

As shown in Fig. 3, when the remaining amount detecting process is started, it is determined whether the ignition switch 25 is on (S200). If the ignition switch 25 is not on (S200: NO), the process is temporarily suspended.

If the ignition switch 25 is on (S200: YES), a current integrated injection amount QES is read (S210). The integrated injection amount QES is the integrated value of the urea water supply amount sprayed from the urea injection valve 230, and is calculated by accumulating the above-mentioned urea target amount QE. More specifically, when the ignition switch 25 is switched from the off state to the on state, the integrated injection amount QES is reset to 0. Then, while the ignition switch 25 is kept in the on state, the above-mentioned urea target amount QE is sequentially accumulated to update the integrated injection amount QES. The calculation of the integrated injection amount QES is performed by a process separate from the above process. Also, the integrated injection amount QES corresponds to the integrated value of the liquid supply amount. In this manner, by setting the integrated injection amount QES, which is obtained by accumulating the urea target amount QE, as the integrated value of the urea water supply amount, the integrated value of the urea water supply amount is obtained without separately providing a detection mechanism for actually detecting the urea water supply amount.

When the current integrated injection amount QES is read, an estimated remaining amount AR is subsequently calculated (S220). The estimated remaining amount AR is the estimated remaining amount of the urea water in the tank 210. The current estimated remaining amount AR is calculated by subtracting the integrated injection amount QES from the above-mentioned stopped state remaining amount PR.

Subsequently, a remaining amount difference ΔR is calculated (S230). The remaining amount difference ΔR is a value representing the degree of separation between the estimated remaining amount AR calculated in step S220 and the urea water remaining amount detected by the level sensor 250. The absolute value of the difference between the estimated remaining amount AR calculated in the step S220 and the sensor-detected remaining amount value SR obtained when the estimated remaining amount AR is calculated is set as the remaining amount difference ΔR. The sensor-detected remaining amount value SR read in step 220 corresponds to a second liquid remaining amount.

Then, it is determined whether the remaining amount difference ΔR exceeds a determination value α (S240). If the remaining amount difference ΔR is less than or equal to the determination value α (S240: NO), the sensor-detected remaining amount value SR detected by the level sensor 250 is set as the current urea water remaining amount NR (S270), and the process is temporarily suspended.

If the remaining amount difference ΔR exceeds the determination value α (S240: YES), it is determined that there is a possibility that the level sensor 250 is misdetecting. If the state in which the remaining amount difference ΔR exceeds the determination value α is temporary, it cannot be determined that the level sensor 250 is misdetecting. To determine that there is been misdetection, in the following step S250, it is determined whether a separation time TK1 exceeds a determination value Tα (S250). The separation time TK1 is a continuous time period during which the remaining amount difference ΔR exceeds the determination value α. If the separation time TK1 is less than or equal to the determination value Tα (S250: NO), the sensor-detected remaining amount value SR detected by the level sensor 250 is set as the current urea water remaining amount NR (S270), and the process is temporarily suspended.

If the separation time TK1 exceeds the determination value Tα (S250: YES), it is determined that the state in which the remaining amount difference ΔR exceeds the determination value α is not temporary but continuous, and that the level sensor 250 is misdetecting. If the sensor-detected remaining amount value SR is set as the current urea water remaining amount NR while the level sensor 250 is misdetecting, the urea remaining amount will be a false detection. Thus, if it is determined that the level sensor 250 is misdetecting, the estimated remaining amount AR calculated in step S220 is set as the current urea water remaining amount NR (S260), and the process is temporarily suspended.

The stopped state process and the process in step S200 to step S250 correspond to processes executed by an abnormality determination section. The processes of step S220 and step S260 correspond to processes executed by an estimation section.

Operation of the stopped state process and the remaining amount detecting process will now be described.

First, the remaining amount of the urea water stored in the tank 210 is gradually reduced after urea supply by the urea injection valve 230 is started. The sum of the integrated value S of the urea supply amount supplied by the urea injection valve 230 from when the urea supply by the urea injection valve 230 is started, that is, the integrated value of the amount of urea water in the tank 210 consumed by the urea injection valve 230, and the sensor-detected remaining amount value SR detected by the level sensor 250 after starting the urea supply by the urea injection valve 230, that is, the actual urea remaining amount detected while the urea water in the tank 210 is being consumed, is referred to as a sum M. When the urea water around the level sensor 250 is not frozen and the level sensor 250 is not misdetecting, the sum M matches with the following value. That is, the sum M matches with the urea remaining amount detected by the level sensor 250 before starting the urea supply by the urea injection valve 230, that is, the urea remaining amount in the tank 210 before starting the urea supply. The injection of the urea water from the urea injection valve 230 is performed during operation of the engine, and the injection of the urea water is ceased when the engine is stopped. Thus, after starting of the engine, the urea remaining amount in the tank 210 before starting the urea supply matches with the sensor-detected remaining amount value SR immediately after stopping the engine, that is, the above-mentioned stopped state remaining amount PR.

For this reason, when the level sensor 250 is not misdetecting, the following expression (1) is satisfied.

Stopped state remaining amount PR = integrated value S of urea supply amount + sensor-detected remaining amount value SR detected by level sensor 250 after starting urea supply...(1)

During operation of the engine, the exhaust heat makes it unlikely that freezing of the urea water will occur. Thus, immediately after stopping the engine, the possibility that the urea water is frozen is low as compared to immediately after starting operation, and the reliability of the sensor-detected remaining amount value SR is high. Thus, the reliability of the estimated remaining amount AR is increased by using the sensor-detected remaining amount value SR immediately after stopping the engine, that is, the stopped state remaining amount PR as the urea remaining amount before starting the urea water supply, in other words, the urea remaining amount from which the integrated injection amount QES is subtracted.

If the urea water around the level sensor 250 is frozen, and the level sensor 250 is misdetecting, the sensor-detected remaining amount value SR detected during consumption of the urea water in the tank 210 is inaccurate. Thus, the sum M of the integrated value S of the urea supply amount and the sensor-detected remaining amount value SR does not match with the stopped state remaining amount PR, and the above expression (1) is not satisfied. As described above, whether the level sensor 250 is misdetecting is determined based on the stopped state remaining amount PR, the integrated value S of the urea supply amount, and the sensor-detected remaining amount value SR.

In the above-mentioned stopped state process, the urea remaining amount in the tank 210 before starting the urea supply, which is the stopped state remaining amount PR, is grasped. In the remaining amount detecting process, whether the level sensor 250 is misdetecting is determined based on the stopped state remaining amount PR, the integrated injection amount QES, which corresponds to the integrated value S of the liquid supply amount, and the sensor-detected remaining amount value SR.

More specifically, the estimated value of the urea remaining amount in the tank 210 is calculated by subtracting the integrated injection amount QES from the stopped state remaining amount PR. Since the sensor-detected remaining amount value SR does not match with the urea remaining amount in the tank 210 if the level sensor 250 is misdetecting, a separation occurs between the estimated value of the urea remaining amount and the sensor-detected remaining amount value SR. Thus, in the remaining amount detecting process, the estimated value of the urea remaining amount, which is the estimated remaining amount AR, is calculated by subtracting the integrated injection amount QES from the stopped state remaining amount PR in step S220. In step S230, the remaining amount difference ΔR is calculated, which represents the degree of separation between the estimated remaining amount AR and the sensor-detected remaining amount value SR obtained when the estimated remaining amountAR is calculated. In step S240, it is determined whether there is a significant separation between the estimated remaining amount AR and the sensor-detected remaining amount value SR obtained when the estimated remaining amount AR is calculated by comparing the remaining amount difference ΔR and the determination value α. If there is a significant separation, it is determined that the level sensor 250 is misdetecting. Thus, whether the level sensor 250 is misdetecting is properly determined based on the urea remaining amount in the tank 210.

If it is determined that the level sensor 250 is misdetecting, the process of step S260 is performed so that the estimated remaining amount AR is used as the urea water remaining amount NR instead of the sensor-detected remaining amount value SR. The estimated remaining amount AR is a value obtained by subtracting the integrated injection amount QES from the stopped state remaining amount PR, that is, a value obtained by subtracting the integrated value of the amount urea water in the tank 210 consumed by the urea injection valve 230 from the urea remaining amount in the tank 210 before starting the urea supply. The estimated remaining amount AR can be used as the estimated value of the urea remaining amount in the tank 210. In this manner, if it is determined that the level sensor 250 is misdetecting, the estimated remaining amountAR is used as the urea water remaining amount NR instead of the sensor-detected remaining amount value SR. Thus, even if the urea water around the level sensor 250 is frozen and the level sensor 250 is misdetecting, the urea remaining amount in the tank 210 can be detected as the estimated value.

As described above, the present embodiment has the following advantages.
(1) Whether the level sensor 250 is misdetecting is determined based on the stopped state remaining amount PR, the integrated injection amount QES, and the sensor-detected remaining amount value SR, which is an actually detected value. Thus, whether the level sensor 250 is misdetecting is properly determined.
   If it is determined that the level sensor 250 is misdetecting, the estimated remaining amount AR obtained by subtracting the integrated injection amount QES from the stopped state remaining amount PR is used as the estimated value of the urea remaining amount in the tank 210. Thus, even if the level sensor 250 is misdetecting due to freezing of the urea water around the level sensor 250, the urea remaining amount in the tank 210 can be detected as the estimated value.
(2) When determining misdetection of the level sensor 250, the estimated remaining amount AR is calculated by subtracting the integrated injection amount QES from the stopped state remaining amount PR. If there is a separation between the value of the estimated remaining amount AR and the sensor-detected remaining amount value SR obtained when the estimated remaining amount AR is calculated, it is determined that the level sensor 250 is misdetecting. Thus, whether there is misdetection is properly determined based on the urea remaining amount in the tank 210.
(3) When calculating the integrated value of the urea water supply amount supplied by the urea injection valve 230 from when the urea supply by the urea injection valve 230 is started, the urea target amount QE calculated by the control device 80 is accumulated. The integrated value of the urea water supply amount is therefore obtained without separately providing a detection mechanism for actually detecting the urea water supply amount.

### Second Embodiment

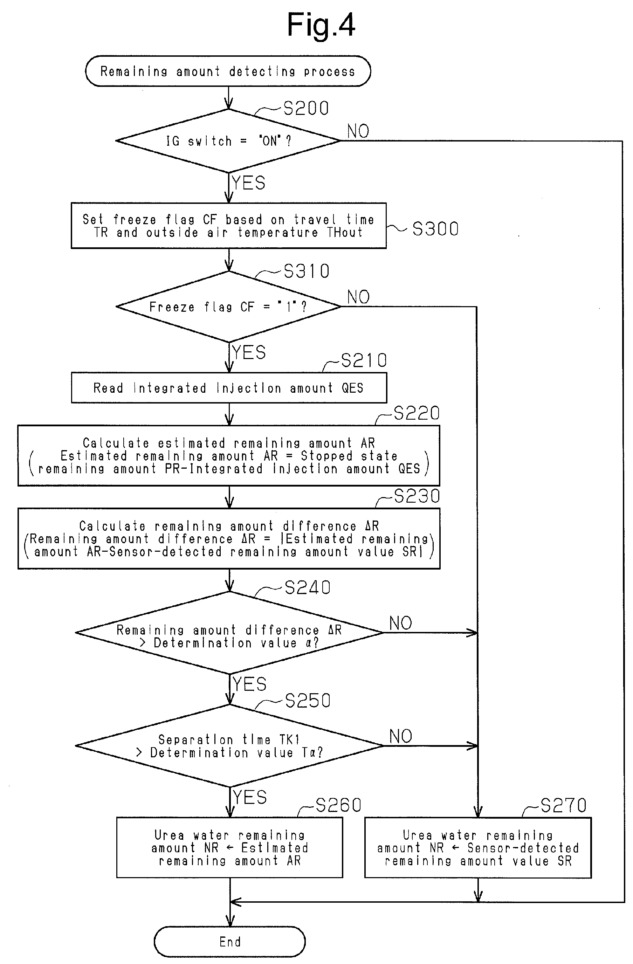

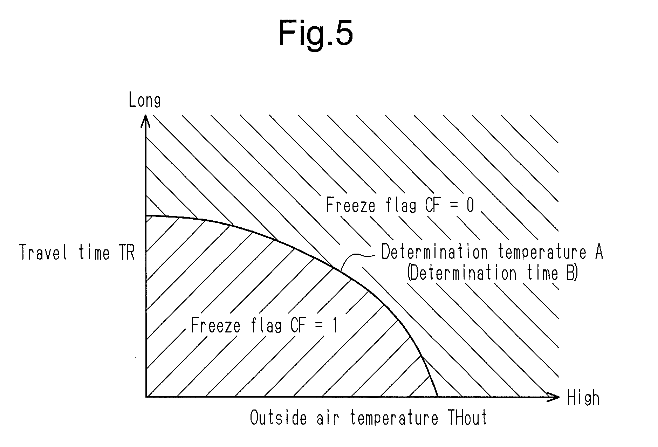

A device for detecting a remaining amount of liquid according to a second embodiment of the present invention will now be described with reference to Figs. 4 and 5.

In the first embodiment, the integrated injection amount QES obtained by accumulating the urea target amount QE is calculated as the integrated value of the urea water supply amount sprayed by the urea injection valve 230 from when the urea supply by the urea injection valve 230 is started, that is, as the integrated value of the amount of urea water in the tank 210 consumed by the urea injection valve 230.

However, the actual injection amount of the urea injection valve 230 may deviate from the urea target amount QE due to changes in the injection pressure of the urea injection valve 230 or the individual differences of the injection valve 230. In this case, error occurs between the integrated injection amount QES and the integrated value of the actually consumed urea water amount. Even if the urea water supply amount is actually detected by a detection mechanism, since the detection mechanism has a detection error, accumulating the urea water supply amount results in the detection errors being accumulated in the integrated value. Thus, even if the urea water supply amount is actually detected by the detection mechanism, an error will occur between the integrated value of the detected urea water supply amount and the integrated value of the actually consumed urea water amount.

If an error occurs in the integrated value as described above, the estimation accuracy of the estimated remaining amount AR obtained using the integrated value is reduced. Thus, erroneous determination will occur in determination of misdetection by the level sensor 250, or an estimation error will be increased when using the estimated remaining amount AR as the urea water remaining amount NR.

In the remaining amount detecting process of the present embodiment, the processes of the following step S300 and step S310 are added to the remaining amount detecting process of the first embodiment to prevent decrease in the accuracy of the urea water remaining amount NR caused by an error in the integrated value.

The remaining amount detecting process of the present embodiment will now be described centering on differences from the remaining amount detecting process of the first embodiment.

As shown in Fig. 4, when the remaining amount detecting process of the present embodiment is started, first, it is determined whether the ignition switch 25 is on (S200). If the ignition switch 25 is not on (S200: NO), the process is temporarily suspended.

If the ignition switch 25 is on (S200: YES), a freeze flag CF is set based on a travel time TR of the vehicle in which the engine 1 is installed and an outside air temperature THout (S300). The freeze flag CF is a flag representing the determination result of whether the urea water in the tank 210 is frozen.

Basically, when the outside air temperature THout is higher than a predetermined temperature, it is determined that the urea water in the tank 210 is not frozen, and the freeze flag CF is set to 0. If the outside air temperature THout is less than or equal to the predetermined temperature, it is determined that the urea water in the tank 210 is frozen, and the freeze flag CF is set to 1.

Moreover, basically, if the travel time TR is greater than a predetermined time, it is also determined that the urea water in the tank 210 is not frozen, and the freeze flag CF is set to 0. If the travel time TR is less than or equal to the predetermined time, it is determined that the urea water in the tank 210 is frozen, and the freeze flag CF is set to 1.

For example, as shown in Fig. 5, if the outside air temperature THout is higher than a previously set determination temperature A, it is determined that the urea water in the tank 210 is not frozen, and the freeze flag CF is set to 0. If the outside air temperature THout is less than or equal to the determination temperature A, it is determined that the urea water in the tank 210 is frozen, and the freeze flag CF is set to 1. Furthermore, the longer the travel time TR, the higher the possibility that the urea water is not frozen becomes. Thus, the longer the travel time TR, the lower the determination temperature A is set. Consequently, when setting the freeze flag CF based on the outside air temperature THout, the longer the travel time TR, the more likely the freeze flag CF is set to 0.

As shown in Fig. 5, the determination temperature A may also be replaced by a determination time B for determining freezing of the urea water based on the travel time TR. That is, when the travel time TR is longer than a previously set determination time B, it is determined that the urea water in the tank 210 is not frozen, and the freeze flag CF is set to 0. If the travel time TR is less than or equal to the determination time B, it is determined that the urea water in the tank 210 is frozen, and the freeze flag CF is set to 1. The higher the outside air temperature THout, the higher the possibility that the urea water is not frozen becomes. Thus, the higher the outside air temperature THout, the shorter the determination time B may be set. In this case, when setting the freeze flag CF based on the travel time TR, the higher the outside air temperature THout, the more likely the freeze flag CF is set to 0. Thus, the same advantages are obtained as in the variable setting of the determination temperature A.

When the freeze flag CF is set based on the travel time TR and the outside air temperature THout, in step S310, it is determined whether the freeze flag CF is 1. If the freeze flag CF is 0 (S310: NO), it is determined that the urea water is not frozen. If it is determined that the urea water is not frozen, the sensor-detected remaining amount value SR detected by the level sensor 250 is set as the current urea water remaining amount NR (S270). That is, if it is determined that the urea water is not frozen, the process after step S210 described in the first embodiment is prohibited without being executed, and the sensor-detected remaining amount value SR is set as the urea water remaining amount NR. The process is then temporarily suspended. The processes of step S300 and step S310 correspond to processes executed by a freeze determination section.

If the freeze flag CF is 1 (S310: YES), it is determined that the urea water is frozen, and the processes of step S210 and the subsequent steps described in the first embodiment are sequentially performed.

Characteristic operation of the remaining amount detecting process according to the present embodiment will now be described.

As described above, if an error occurs in the integrated value of the urea water supply amount (integrated injection amount QES), the estimation accuracy of the estimated remaining amount AR obtained using the integrated value is reduced. Thus, erroneous determination will occur in determining the existence of misdetection by the level sensor 250, or an estimation error will be increased when using the estimated remaining amount AR as the urea water remaining amount NR.

If the urea water in the tank 210 is not frozen, the urea remaining amount in the tank 210 can be detected by the level sensor 250. Thus, it is unnecessary to determine the existence of misdetection by the level sensor 250, or to calculate the estimated remaining amount AR.

In the remaining amount detecting process of the present embodiment, the processes of step S300 and step S310 are performed in addition to the remaining amount detecting process of the first embodiment. That is, when determining whether the urea water in the tank 210 is frozen, and if it is determined that the urea water is not frozen, determination of misdetection of the level sensor 250 is not performed, thus prohibiting the execution of the determination of misdetection. Then, the sensor-detected remaining amount value SR is used as the urea water remaining amount NR in the tank 210. Thus, if the urea water is not frozen, the urea water remaining amount NR in the tank 210 is accurately detected without being influenced by an error in the integrated value of the urea water supply amount (integrated injection amount QES).

As described above, the present embodiment has the following advantage (4) in addition to the above-mentioned advantages (1) to (3).
(4) When determining whether the urea water in the tank 210 is frozen, and if it is determined that the urea water is not frozen, the misdetection determination of the level sensor 250 is prohibited, and the sensor-detected remaining amount value SR is set as the urea water remaining amount NR in the tank 210. Thus, the urea water remaining amount NR in the tank 210 is accurately detected without being influenced by an error in the integrated injection amount QES.

The above embodiments may be modified as follows.

The estimated remaining amount AR is calculated by subtracting the integrated injection amount QES from the stopped state remaining amount PR. Whether the level sensor 250 is misdetecting is determined by comparing the value of the estimated remaining amount AR and the sensor-detected remaining amount value SR. That is, whether there is misdetection is determined based on the urea remaining amount in the tank 210. Furthermore, as described above, when the level sensor 250 has not made a misdetection, the above expression (1), that is, the following expression (stopped state remaining amount PR = integrated value S of urea supply amount + sensor-detected remaining amount value SR detected by level sensor 250 after starting urea supply) is satisfied. Thus, the expression may be changed as required to determine whether the level sensor 250 is misdetecting.

For example, the urea water amount stored in the tank 210 and the urea water amount consumed from the tank 210 complement each other. Thus, whether the level sensor 250 is misdetecting may be determined based on the amount of urea water consumed from the tank 210.

That is, by subtracting the sensor-detected remaining amount value SR from the stopped state remaining amount PR, the urea consumption amount NS in the tank 210 is calculated. The urea consumption amount NS is a value that, if the level sensor 250 has not made a misdetection, matches with the integrated value of the urea water supply amount, that is, the integrated injection amount QES. If the level sensor 250 is misdetecting, the sensor-detected remaining amount value SR is not accurately detected, and the urea consumption amount NS cannot be accurately calculated. Thus, in this case, the calculated urea consumption amount NS and the integrated injection amount QES do not match. Thus, it may be determined that the level sensor 250 is misdetecting if there is a separation between the value obtained by subtracting the sensor-detected remaining amount value SR from the stopped state remaining amount PR and the integrated injection amount QES (the integrated value of the urea water supply amount) obtained when the subtracted value is calculated.

In the remaining amount detecting process according to the modification, for example, part of the remaining amount detecting process of the first embodiment is changed.

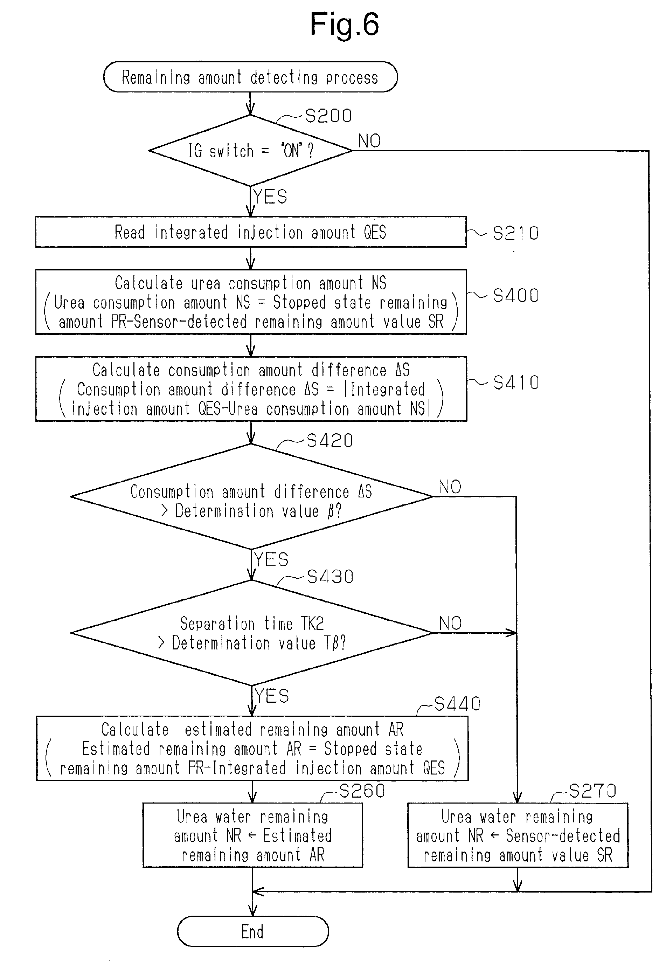

Fig. 6 shows the procedure of the remaining amount detecting process according to the modification. In Fig. 6, steps that are the same as those described in Fig. 3 are provided with the same numbers.

As shown in Fig. 6, when the remaining amount detecting process is started, first, it is determined whether the ignition switch 25 is on (S200). If the ignition switch 25 is not on (S200: NO), the process is temporarily suspended.

If the ignition switch 25 is on (S200: YES), the current integrated injection amount QES is read (S210).

After the current integrated injection amount QES is read, the urea consumption amount NS is calculated (S400). The urea consumption amount NS is the total amount of the urea water consumed from the tank 210 from when the ignition switch 25 is switched on until the current time. The current urea consumption amount NS is calculated by subtracting the current sensor-detected remaining amount value SR from the stopped state remaining amount PR. In the present embodiment, the sensor-detected remaining amount value SR read in step 400 corresponds to the second liquid remaining amount.

Subsequently, the consumption amount difference ΔS is calculated (S410). The consumption amount difference ΔS is a value representing the degree of separation between the urea consumption amount NS calculated in step S400 and the integrated injection amount QES obtained when the urea consumption amount NS is calculated, that is, the integrated injection amount QES read in step S210 in the current routine. The absolute value of the difference between the urea consumption amount NS calculated in step S400 and the integrated injection amount QES read in the routine in which the urea consumption amount NS is calculated is set as the consumption amount difference ΔS.

Then, it is determined whether the consumption amount difference ΔS exceeds a determination value β (S420). If the consumption amount difference ΔS is less than or equal to the determination value β (S420: NO), the sensor-detected remaining amount value SR detected by the level sensor 250 is set as the current urea water remaining amount NR (S270), and the process is temporarily suspended.

If the consumption amount difference ΔS exceeds the determination value β (S420: YES), it is determined that there is a possibility that the level sensor 250 is misdetecting. If the state in which the consumption amount difference ΔS exceeds the determination value β is temporary, it cannot be determined that the level sensor 250 is misdetecting. To determine that there is misdetection, it is determined in the following step S430 whether a separation time TK2 exceeds a determination value Tβ (S430). The separation time TK2 is a continuous time period during which the consumption amount difference ΔS exceeds the determination value β. If the separation time TK2 is less than or equal to the determination value Tβ (S430: NO), the sensor-detected remaining amount value SR detected by the level sensor 250 is set as the current urea water remaining amount NR (S270), and the process is temporarily suspended.

If the separation time TK2 exceeds the determination value Tβ (S430: YES), it is determined that the state in which the consumption amount difference ΔS exceeds the determination value β is not temporary but continuous, and that the level sensor 250 is misdetecting. If it is determined that the level sensor 250 is misdetecting in this manner, the estimated remaining amount AR is calculated (S440). The estimated remaining amount AR is an estimated remaining amount of the urea water in the tank 210. The current estimated remaining amount AR is calculated by subtracting the integrated injection amount QES read in step S210 from the above-mentioned stopped state remaining amount PR. The estimated remaining amount AR calculated in step S440 is then set as the current urea water remaining amount NR (S260), and the process is temporarily suspended.

In this modification, the stopped state process, the processes of step S200, step S210, and step S400 to step S430 correspond to the processes executed by the abnormality determination section. Also, the processes of step S440 and step S260 correspond to the processes executed by the estimation section.

According to the above modifications, based on the consumption amount of the urea water in the tank 210, whether the level sensor 250 is misdetecting is properly determined.

The processes of step S300 and step S310 described in the second embodiment may be added between the process of step S200 and the process of step S210 shown in Fig. 6.

The process of step S250 shown in Figs. 3 and 4, and the process of step S430 shown in Fig. 6 may be omitted.

The integrated value of the urea water supply amount is obtained by calculating the integrated injection amount QES. Furthermore, a detection mechanism, which actually detects the urea water supply amount, may be provided. The integrated value of the urea water supply amount may be obtained by accumulating the detection values of the detection mechanism. For example, a flow rate sensor may be provided in the supply passage 240 of the urea water. The amount of urea water that is sprayed from the urea injection valve 230 may be actually detected by the flow rate sensor, and the integrated value of the detection values may be used as a substitute value of the integrated injection amount QES.

In the second embodiment, the value of the freeze flag CF is set based on the outside air temperature THout and the travel time TR. However, the value of the freeze flag CF may be set based on only the outside air temperature THout, or only the travel time TR.

In the second embodiment, the freezing state of the urea water is determined based on the outside air temperature THout and the travel time TR, but may be determined in other manners. For example, a detector for detecting the fluctuation of the liquid surface may be provided in the tank 210. If the fluctuation of the liquid surface is not detected during traveling of the vehicle, it may be determined that the urea water is frozen, and the freeze flag CF may be set to 1. If the fluctuation of the liquid surface is detected, it may be determined that the urea water is not frozen, and the freeze flag CF may be set to 0.

The urea water is used as the reducing agent, but other reducing agents may be used.

In each of the above embodiments, a reducing agent used in exhaust gas purification of the exhaust gas purifying catalyst of the engine 1 is stored in the tank 210. The device for detecting a remaining amount according to the present invention is applied to the device for detecting a remaining amount of the reducing agent stored in the tank 210. However, the device for detecting a remaining amount according to the present invention may be applied to other devices for detecting a remaining amount. For example, the device for detecting a remaining amount according to the present invention may be applied to a device for detecting a remaining amount for a fuel tank that stores engine fuel, or a device for detecting a remaining amount for a lubricant oil tank that stores an engine lubricant. Also, the device for detecting a remaining amount according to the present invention may be applied to any devices for detecting a remaining amount in the same manner as long as the devices include a tank for storing liquid that is not limited to liquid for use in an engine, a detector for detecting an amount of liquid remaining in a tank, and a supplying mechanism for supplying liquid in a tank to an object to be supplied, and the devices detect the integrated value of the liquid supply amount supplied by the supplying mechanism.

### DESCRIPTION OF THE REFERENCE NUMERALS

1...engine, 2...cylinder head, 3...intake passage, 4a to 4d...fuel injection valves, 5...fuel addition valve, 6a to 6d...exhaust ports, 7...intake manifold, 8...exhaust manifold, 9...common rail, 10...supply pump, 11...turbocharger, 13...EGR passage, 14...EGR cooler, 15... EGR valve, 16... intake throttle valve, 17... actuator, 18... intercooler, 19... air flow meter, 20...throttle valve opening degree sensor, 21...engine speed sensor, 22... accelerator pedal depression sensor, 23...outside air temperature sensor, 24...vehicle speed sensor, 25... ignition switch, 26...exhaust passage, 27...fuel supply pipe, 30...first purifying member, 31...oxidation catalyst, 32...filter, 40...second purifying member, 41...NOx purifying catalyst (selective reduction NOx catalyst: SCR catalyst), 50...third purifying member, 51...ammonia oxidation catalyst, 60...dispersion plate, 80...control device, 100...first exhaust gas temperature sensor, 110...differential pressure sensor, 120...second exhaust gas temperature sensor, 130...first NOx sensor, 140...second NOx sensor, 200... urea water supplying mechanism, 210...tank, 220... pump, 230... urea injection valve, 240... supply passage, 250... level sensor.

## Claims

1. A device for detecting a remaining amount of liquid, comprising:
a tank (210) for storing liquid;
a detector (250) for detecting the remaining amount of liquid in the tank (210);
a supplying mechanism (230), which supplies the liquid in the tank (210) to an object to be supplied;
an abnormality determination section (80) comprising means which determine whether the detector (250) is misdetecting based on a first remaining liquid amount detected by the detector (250) before starting liquid supply by the supplying mechanism (230), an integrated value of liquid supply amount supplied by the supplying mechanism (230) from when the liquid supply by the supplying mechanism (230) has been started, and a second remaining liquid amount detected by the detector (250) after starting the liquid supply by the supplying mechanism (230); and
an estimation section (80), wherein, when the abnormality determination section (80) determines that there is misdetection in the detector (250), the estimation section (80) sets, as the remaining amount of liquid in the tank (210), an estimated value of remaining liquid amount obtained by subtracting the integrated value of liquid supply amount from the first remaining liquid amount,
wherein the abnormality determination section (80) determines that there is misdetection in the detector (250) when the following expression is not satisfied:
the first remaining liquid amount = the integrated value of liquid supply amount + the second remaining liquid amount.

2. The device for detecting a remaining amount of liquid according to claim 1, wherein
if there is a difference between the estimated value of remaining liquid amount and the detected second remaining liquid amount obtained when the estimated value of remaining liquid amount is calculated, the abnormality determination section (80) determines that there is misdetection in the detector (250).

3. The device for detecting a remaining amount of liquid according to claim 1, wherein
the abnormality determination section (80) calculates a liquid consumption amount by subtracting the second remaining liquid amount from the first remaining liquid amount, and
if there is a difference between the liquid consumption amount and the integrated value of liquid supply amount obtained when the liquid consumption amount is calculated, the abnormality determination section (80) determines that there is misdetection in the detector (250).

4. The device for detecting a remaining amount of liquid according to any one of claims 1 to 3, further comprising a controller (80), which sets a target value of the liquid supply amount and controls the supply amount of liquid supplied by the supplying mechanism (230), wherein
the abnormality determination section (80) calculates the integrated value of the liquid supply amount by accumulating the target value.

5. The device for detecting a remaining amount of liquid according to any one of claims 1 to 4, further comprising a freeze determination section (80), which determines whether the liquid in the tank (210) is frozen, wherein
when the freeze determination section (80) determines that the liquid is not frozen, the device for detecting a remaining amount prohibits determination by the abnormality determination section (80), and sets a detection value of the detector (250) as the remaining amount of liquid in the tank (210).

6. The device for detecting a remaining amount of liquid according to claim 5, wherein, when the outside air temperature is higher than a predetermined temperature, the freeze determination section (80) determines that the liquid in the tank (210) is not frozen.

7. The device for detecting a remaining amount of liquid according to claim 5, wherein
the device for detecting a remaining amount is provided in a vehicle that mounts an internal combustion engine (1), and
when the travel time of the vehicle is greater than a predetermined time, the freeze determination section (80) determines that the liquid in the tank (210) is not frozen.

8. The device for detecting a remaining amount of liquid according to any one of claims 1 to 7, wherein
the liquid is a reducing agent used in exhaust gas purification performed by an exhaust gas purifying catalyst (41) for the internal combustion engine (1),
the object to be supplied is an exhaust passage (26) of the internal combustion engine (1),
the supplying mechanism (230) is an injection valve (230), which sprays the reducing agent, and
the liquid supply amount is a spray amount of the injection valve (230).

## Patentansprüche

1. Gerät zur Erfassung einer Restflüssigkeitsmenge, mit:
einem Behälter (210) zur Aufbewahrung einer Flüssigkeit;
einer Erfassungsvorrichtung (250) zur Erfassung der Restflüssigkeitsmenge in dem Behälter (210);
einer Zufuhrvorrichtung (230), die die Flüssigkeit in dem Behälter (210) einem zu versorgenden Objekt zuführt;
einem Abweichungsbestimmungsabschnitt (80), der Einrichtungen zur Falscherfassungsbestimmung der Erfassungsvorrichtung (250) basierend auf einer ersten von der Erfassungsvorrichtung (250) erfassten Restflüssigkeitsmenge vor Beginn einer Flüssigkeitszufuhr durch die Zufuhrvorrichtung (230), einem Integralwert der Flüssigkeitszufuhrmenge, die durch die Zufuhrvorrichtung (230) ab Beginn der Flüssigkeitszufuhr durch die Zufuhrvorrichtung (230) zugeführt wurde, und einer zweiten durch die Erfassungsvorrichtung (250) erfassten Restflüssigkeitsmenge ab Beginn der Flüssigkeitszufuhr durch die Zufuhrvorrichtung (230) umfasst; und
einem Schätzabschnitt (80), wobei bei einer Falscherfassungsbestimmung in der Erfassungsvorrichtung (250) durch den Abweichungsbestimmungsabschnitt (80) der Abweichungsbestimmungsabschnitt (80) einen durch Subtraktion des Restflüssigkeitsmengenintegralwertes von der ersten Restflüssigkeitsmenge erhaltenen Restflüssigkeitsmengenschätzwert als die Restflüssigkeitsmenge in dem Behälter (210) festlegt,
wobei der Abweichungsbestimmungsabschnitt (80) eine Falscherfassung in der Erfassungsvorrichtung (80) bestimmt, wenn der folgende Ausdruck nicht erfüllt ist:
die erste Restflüssigkeitsmenge = der Flüssigkeitszufuhrmengenintegralwert + die zweite Restflüssigkeitsmenge.

2. Gerät zur Erfassung einer Restflüssigkeitsmenge nach Anspruch 1, wobei
der Abweichungsbestimmungsabschnitt (80) bei Verbleiben einer Differenz zwischen dem Restflüssigkeitsmengenschätzwert und der erfassten zweiten, bei Berechnung des Restflüssigkeitsmengenschätzwertes erhaltenen Restflüssigkeitsmenge eine Falscherfassung in der Erfassungsvorrichtung (250) bestimmt.

3. Gerät zur Erfassung einer Restflüssigkeitsmenge nach Anspruch 1, wobei
der Abweichungsbestimmungsabschnitt (80) eine Flüssigkeitsverbrauchsmenge durch Subtraktion der zweiten Restflüssigkeitsmenge von der ersten Restflüssigkeitsmenge berechnet, und
bei Verbleiben einer Differenz zwischen der Flüssigkeitsverbrauchsmenge und dem bei Berechnung der Flüssigkeitsverbrauchsmenge erhaltenen Flüssigkeitszufuhrmengenintegralwert der Abweichungsbestimmungsabschnitt (80) eine Falscherfassung in der Erfassungsvorrichtung (250) bestimmt.

4. Gerät zur Erfassung einer Restflüssigkeitsmenge nach einem der Ansprüche 1 bis 3, ferner mit einer Steuerung (80), die einen Flüssigkeitszufuhrmengensollwert festlegt, und die durch die Zufuhrvorrichtung (230) zugeführte Flüssigkeitszufuhrmenge steuert, wobei
der Abweichungsbestimmungsabschnitt (80) den Flüssigkeitszufuhrmengenintegralwert durch Akkumulation des Sollwertes berechnet.

5. Gerät zur Erfassung einer Restflüssigkeitsmenge nach einem der Ansprüche 1 bis 4, ferner mit einem Frostbestimmungsabschnitt (80) zur Bestimmung, ob die Flüssigkeit in dem Behälter (210) gefroren ist, wobei
das Gerät zur Erfassung einer Restmenge eine Bestimmung durch den Abweichungsbestimmungsabschnitt (80) verbietet, und einen Erfassungswert der Erfassungsvorrichtung (250) als die Restflüssigkeitsmenge in dem Behälter festlegt, wenn der Frostbestimmungsabschnitt (80) bestimmt, dass die Flüssigkeit nicht gefroren ist.

6. Gerät zur Erfassung einer Restflüssigkeitsmenge nach Anspruch 5, wobei der Frostbestimmungsabschnitt (80) bestimmt, dass die Flüssigkeit in dem Behälter (210) nicht gefroren ist, wenn die Außenlufttemperatur höher als eine vorbestimmte Temperatur ist.

7. Gerät zur Erfassung einer Restflüssigkeitsmenge nach Anspruch 5, wobei
das Gerät zur Erfassung einer Restflüssigkeitsmenge in einem Fahrzeug bereitgestellt ist, in dem eine Brennkraftmaschine (1) angebracht ist, und
der Frostbestimmungsabschnitt (80) bestimmt, dass die Flüssigkeit in dem Behälter (210) nicht gefroren ist, sobald die Fahrzeit des Fahrzeugs größer als eine vorbestimmte Zeit ist.

8. Gerät zur Erfassung einer Restflüssigkeitsmenge nach einem der Ansprüche 1 bis 7, wobei
die Flüssigkeit ein Reduktionsmittel zur Verwendung in einer Abgasreinigung für die Brennkraftmaschine (1) durch einen Abgasreinigungskatalysator (41) aufweist,
das zuzuführende Objekt einen Entlüftungskanal (26) der Brennkraftmaschine (1) aufweist,
die Zufuhrvorrichtung (230) ein Einspritzventil (230) zum Versprühen des Reduktionsmittels aufweist, und
die Flüssigkeitszufuhrmenge eine Sprühmenge des Einspritzventils (230) aufweist.

## Revendications

1. Dispositif de détection d'une quantité restante de liquide, comprenant :
un réservoir (210) pour stocker un liquide ;
un détecteur (250) pour détecter la quantité restante de liquide dans le réservoir (210) ;
un mécanisme d'alimentation (230) qui alimente en liquide du réservoir (210) un objet à alimenter ;
une section (80) de détermination d'anomalie comprenant des moyens qui établissent si le détecteur (250) fait une erreur de détection, sur la base d'une première quantité de liquide restant détectée par le détecteur (250) avant le démarrage de l'alimentation en liquide par le mécanisme d'alimentation (230), une valeur intégrée de la quantité d'alimentation en liquide fournie par le mécanisme d'alimentation (230) à partir du moment où l'alimentation en liquide par le mécanisme d'alimentation (230) a été démarrée, et une seconde quantité de liquide restant détectée par le détecteur (250) après le démarrage de l'alimentation en liquide par le mécanisme d'alimentation (230) ; et
une section (80) d'estimation, dans laquelle, quand la section (80) de détermination d'anomalie établit qu'il y a une erreur de détection dans le détecteur (250), la section (80) d'estimation fixe comme quantité restante de liquide dans le réservoir (210) une valeur estimée de la quantité restante de liquide obtenue en soustrayant de la première quantité de liquide restant la valeur intégrée de la quantité d'alimentation en liquide,
dans lequel la section (80) de détermination d'anomalie établit qu'il y a une erreur de détection dans le détecteur (250) quand l'expression ci-après n'est pas satisfaite :
première quantité de liquide restant = valeur intégrée de la quantité d'alimentation en liquide + seconde quantité de liquide restant.

2. Dispositif de détection d'une quantité restante de liquide selon la revendication 1, dans lequel, s'il y a une différence entre la valeur estimée de la quantité de liquide restant et la seconde quantité de liquide restant détectée quand on calcule la valeur estimée de la quantité de liquide restant, la section (80) de détermination d'anomalie établit qu'il y a une erreur de détection dans le détecteur (250).

3. Dispositif de détection d'une quantité restante de liquide selon la revendication 1, dans lequel la section (80) de détermination d'anomalie calcule une quantité de consommation de liquide en soustrayant la seconde quantité de liquide restant de la première quantité de liquide restant et, s'il y a une différence entre la quantité de consommation de liquide et la valeur intégrée de la quantité d'alimentation en liquide obtenue lors du calcul de la quantité de consommation de liquide, la section (80) de détermination d'anomalie établit qu'il y a une erreur de détection dans le détecteur (250).

4. Dispositif de détection d'une quantité restante de liquide selon l'une quelconque des revendications 1 à 3, comprenant en outre un régulateur automatique (80), qui fixe une valeur cible pour la quantité d'alimentation en liquide et commande la quantité d'alimentation de liquide fournie par le mécanisme d'alimentation (230),
dans lequel la section (80) de détermination d'anomalie calcule la valeur intégrée de la quantité d'alimentation en liquide en cumulant les valeurs cibles.

5. Dispositif de détection d'une quantité restante de liquide selon l'une quelconque des revendications 1 à 4, comprenant en outre une section (80) de détermination de gel, qui établit si le liquide dans le réservoir (210) est gelé,
dans lequel, quand la section (80) de détermination de gel établit que le liquide n'est pas gelé, le dispositif de détection d'une quantité restante empêche la détermination par la section (80) de détermination d'anomalie et fixe une valeur de détection du détecteur (250) comme quantité restante de liquide dans le réservoir (210).

6. Dispositif de détection d'une quantité restante de liquide selon la revendication 5, dans lequel, quand la température extérieure est supérieure à une température prédéterminée, la section (80) de détermination de gel établit que le liquide dans le réservoir (210) n'est pas gelé.

7. Dispositif de détection d'une quantité restante de liquide selon la revendication 5, dans lequel le dispositif de détection d'une quantité restante est utilisé dans un véhicule équipé d'un moteur à combustion interne (1), et quand le temps de déplacement du véhicule est supérieur à une durée prédéterminée, la section (80) de détermination de gel établit que le liquide dans le réservoir (210) n'est pas gelé.

8. Dispositif de détection d'une quantité restante de liquide selon l'une quelconque des revendications 1 à 7, dans lequel
le liquide est un agent réducteur utilisé dans l'épuration des gaz d'échappement effectuée par un catalyseur (41) d'épuration des gaz d'échappement pour le moteur à combustion interne (1),
l'objet à alimenter est une sortie (26) d'échappement du moteur à combustion interne (1),
le mécanisme d'alimentation (230) est une soupape d'injection (230), qui pulvérise l'agent réducteur, et
la quantité d'alimentation en liquide est la quantité de pulvérisation de la soupape d'injection (230).
